# EUROPEAN PATENT SPECIFICATION

(11) **EP 2 921 060 B1**
(45) Date of publication and mention of the grant of the patent: **19.04.2017**
(21) Application number: 15159436.3
(22) Date of filing: 17.03.2015
(51) Int. Cl.: A23C 11/02, A23K 50/00, A23K 20/00

(54) **HIGH PROTEIN MILK REPLACERS CONTAINING NON-MILK PROTEINS AND FEEDING METHODS AND SYSTEMS THEREOF**
PROTEINREICHE MILCHERSÄTZE MIT NICHT-MILCH-PROTEINEN, SOWIE FÜTTERVERFAHREN UND -SYSTEME
SUCCÉDANÉS DE LAIT À FORTE TENEUR EN PROTÉINES CONTENANT DES PROTÉINES NON LAITIÈRES, PROCÉDÉS D'ALIMENTATION ET SYSTÈMES ASSOCIÉS

(30) Priority: 17.03.2014 US 201414215604
(43) Date of publication of application: 23.09.2015
(60) Divisional application: 17161383.9
(73) Proprietor: Purina Animal Nutrition LLC, Shoreview, MN 55126 (US)
(72) Inventor: Miller, Bill L., Labadie, MO 63055 (US)
(74) Representative: Arends, William Gerrit

(56) References cited:
- CN-A- 101 049 116
- CN-A- 101 911 981
- US-A1- 2014 147 548
- US-B1- 6 541 047
- HILL S R ET AL: "Effects of Milk Replacer Composition on Growth, Body Composition, and Nutrient Excretion in Preweaned Holstein Heifers", JOURNAL OF DAIRY SCIENCE, AMERICAN DAIRY SCIENCE ASSOCIATION, US, vol. 91, no. 8, 1 August 2008 (2008-08-01) , pages 3145-3155, XP026954987, ISSN: 0022-0302 [retrieved on 2008-08-01]
- Anonymous: "Jersey Blend - Cow's match - Calf growth formula", , 1 January 2004 (2004-01-01), March 2013 (2013-03), XP55194288, Retrieved from the Internet: URL:http://www.lolmilkreplacer.com/stellen t/groups/public/documents/web_content/ecmp 2-0186429.pdf [retrieved on 2015-06-08]

## Description

### TECHNICAL FIELD

The present disclosure relates generally to methods of feeding milk replacers to calves, and more particularly to feeding calves milk replacers with high protein levels, at least a portion of which is a non-milk protein.

### BACKGROUND

Livestock animals are a commodity and are raised to produce food products including milk and meat. The time it takes livestock to mature, particularly to gain weight, is important when assessing whether the animal is ready to produce milk or is ready for market. A number of feeding systems have been used to enhance weight gain of livestock beginning at a young age, and may include feeding techniques prior to and after weaning. Such techniques may involve providing milk replacers to the animals that generally mimic the milk produced from the post-partum parent animal in terms of protein, fat and carbohydrate content. The milk replacer may be supplemented with vitamins, minerals, medication and other compositions that may benefit the calves. This may, for example, reduce the age of freshening or the onset of lactation of a dairy cow, thereby reducing the cost of milk production. Increased weight gain of livestock from an early age may also reduce the cost of beef production.

A concern for producers is whether livestock animals are receiving adequate nutrients. When the livestock animals refuse feed, intake is decreased, which may be problematic from both the standpoint of the health of the animal and to the cost of milk or meat production. Differences in feed intake by animals impact rate of weight gain and ultimately body size. Smaller animals are more difficult to adequately manage due to their specific housing, dietary and husbandry needs.

Although various feeding systems have been practiced to enhance weight gain, these feeding systems, have not optimized methods for increasing the rate and uniformity of weight gain by the livestock animals from a young age. Accordingly, producers are in need of new approaches to feeding young livestock animals as well as other calves that enhance weight gain rates and/or increase feed efficiency.

### SUMMARY

According to one implementation, a method of feeding a calf involves providing at least 1.8 pounds (0.816 kg) of a milk replacer by dry weight per calf per day beginning from birth for at least twenty-one days. The milk replacer includes at least about 25 percent protein by dry weight, and at least about 1 percent of the protein by dry weight is a non-milk protein. After ingesting the milk replacer for twenty-one days, the calf experiences improved performance.

Implementations may further involve providing the calf a starter feed on an ad *libitum* basis, and after ingesting the milk replacer, the animal may exhibit improved performance through an increased rate of starter feed intake. In addition or alternatively, improved performance is through exhibiting an increased milk replacer intake, an increased feed-to-gain ratio, and/or an increased rate of weight gain. According to certain implementations, the non-milk protein comprises from about 1 percent to about 65 percent of the protein by dry weight, and such non-milk protein comprises one or more of hydrolyzed soy protein modified, soy protein concentrate, soy protein isolate, wheat protein, potato protein, egg protein, blood plasma, red blood cells or egg. A balance of the protein in the milk replacer is protein derived from milk such as all-milk protein.

According to another implementation, a method of feeding calves involves providing at least 1.8 pounds (0.816 kg) of a milk replacer by dry weight per calf per day beginning from birth for at least twenty-one days, where the milk replacer includes at least about 25 percent protein by dry weight and where at least about 1 percent of the protein by dry weight is a non-milk protein, which includes one or more of hydrolyzed soy protein modified, wheat protein, potato protein, egg protein, blood plasma, red blood cells or egg. The non-milk protein may additionally include one or more of soy protein concentrate or soy protein isolate. At twenty-one days from birth, the calf may experience improved performance in response to the calf ingesting the milk replacer as described. Non-milk protein may account for from about 1 percent to about 65 percent of the protein by dry weight, and a balance of the protein in the milk replacer may be protein derived from milk.

There is disclosed, a daily ration of milk replacer for calves includes at least 1.8 pounds (0.816 kg) by dry weight of a milk replacer per animal per day, where the milk replacer includes at least 25 percent protein by dry weight and at least 1 percent of the protein by dry weight is a non-milk protein including one or more of hydrolyzed soy protein modified, wheat protein, potato protein, egg protein, blood plasma, red blood cells or egg. The non-milk protein may additionally include one or more of soy protein concentrate or soy protein isolate. Non-milk protein may account for from about 1 percent to about 65 percent of the protein by dry weight. A balance of the protein in the milk replacer may be protein derived from milk.

### DETAILED DESCRIPTION

### Overview

Methods of feeding high protein milk replacers containing non-milk protein are applicable to calves. High protein milk replacers may also be referred to as full potential milk replacers, and may contain at least 25 percent protein by dry weight, which is provided by a combination of non-milk proteins and milk proteins. These proteins have been found to be complementary to each other in full potential settings, e.g., when offered at enhanced feeding rates of 1.6 pounds (0.726 kg) per day or higher, because they have the effect of optimizing calf performance when fed in combination at enhanced feeding rates.

Those studying full potential milk replacers in full potential settings commonly look to conventional milk replacers fed in conventional settings to predict animal performance. These conventional milk replacers generally contain less than 25 percent protein by dry weight and are fed in conventional settings, e.g., at a rate of up to about 1.5 pounds (0.680 kg) per head/day on a dry weight basis. Most conventional milk replacers contain all-milk proteins that are typically derived from cow's milk. Some conventional milk replacers contain non-milk proteins from other sources. These non-milk proteins have been used in animal milk replacers for decades as a means to reduce cost of products. Both animal and plant alternative proteins, referred to as non-milk proteins, have been used in this application. However, it has been long known that non-milk proteins fail to support equal performance to those proteins contained in mother's milk. Many trials with calf milk replacers have been conducted with these alternative proteins and demonstrate poorer animal performance including poorer health. This reduction in performance occurs immediately when infant animals are fed diets containing meaningful inclusions of non-milk proteins. These infant animals simply do not have the digestive infrastructure to effectively utilize non-milk proteins during the first three weeks of life. While the enzymes required to utilize these proteins increase rapidly thereafter, the lag caused during the first three weeks of life generally is not overcome by subsequent performance. Performance totals recorded at weaning (typically six to eight weeks of life) reflect the poorer performance occurring during the first three weeks of life.

Research information is available to suggest that non-milk proteins can be used at low inclusions (less than 5 percent of the formula) without an apparent impact on total performance. Touchette, et al., J. Dairy Sci., 86, 2622 - 2628 (2003). However, observations are misleading. The lack of a performance reduction noted in trial occurs due to the dilution of the non-milk proteins with a great percentage of milk proteins and/or the general poor performance of animals (low nutrient requirement). Also, many times the early performance (first three weeks of life) is not presented. Therefore, animals would have had the opportunity to compensate during the latter phase of milk replacer feeding (after the enzyme systems have matured).

The situational assessment above is the experience of the milk replacer industry since its inception in the early 1950s. During this period, most milk replacers were fed to provide 1.5 pounds (0.680 kg) of powder or less, daily (milk replacer powder is hydrated in water just prior to feeding). At this low feeding rate of milk replacer powder, non-milk proteins when included at meaningful inclusions reduce early and generally total calf performance.

Approximately 15 years ago, a new milk replacer approach was developed. This approach leverages the improved efficiency of calves but requires the feeding of more powder containing a higher protein level. These milk replacers are fed at rates providing over 1.5 pounds (0.680 kg) of powder, daily. Additionally, the milk replacer powder contains 25 percent protein or higher. Research with this approach (referred to as full potential, accelerated and/or intensified programs) has generally been completed with all-milk proteins. However, it has been discovered that when non-milk protein is included in full potential milk replacers, early and total calf performance is not diminished but instead performance is maintained or even improved.

As discussed, comparatively, calves fed conventional milk replacers containing proteins from other sources generally underperform compared to calves fed milk replacers containing all-milk proteins. The calves offered the milk replacer containing the alternative protein may not consume the amount offered, and even when the animal consumes the total amount offered, the animal's performance falls short of that of its counterpart ingesting the all-milk protein milk replacer. For conventionally fed calves, as the level of non-milk protein increases, this results in an almost linear decrease in animal performance. Observing reduced animal performance has led producers away from feeding milk replacers containing alternative protein sources. This is particularly true in the full potential setting, where the calf is expected to ingest milk replacer at an enhanced feeding rate and is expected to experience increased growth (e.g., weight, body length, hip height). Consequently, the protein used in formulating the milk replacers has been all-milk protein due to the observed drawbacks of feeding calves alternative proteins. However, it has been discovered that the hindrance of the immature enzyme system can be circumvented by feeding the calves a mixture of complementary non-milk and milk proteins in milk replacers containing at least 25 percent protein by dry weight, generally at a rate of at least 1.6 pounds (0.726 kg) per head per day or more. Further, the approach to formulating milk replacers with complementary proteins itself may circumvent the immature enzymatic system of the calf, even when such milk replacers are fed at lower feeding rates, such as at traditional rates of 1.5 pounds (0.680 kg) per head per day or less.

The feeding of high protein milk replacers in calves is described in e.g., Hill SR et al, J. Dairy sci. 2008; 91: 3145-3155. A calf milk replacer comprising soybean and whey proteins is described in CN101049116.

### Milk Replacers Containing Non-Milk Proteins

The milk replacers of the present disclosure may be referred to as full potential milk replacers. These milk replacers generally contain elevated levels of protein and sometimes fat compared to conventional milk replacers. The full potential milk replacers may include protein from about 25 to about 31 percent of the total weight of the milk replacer on a dry weight basis. According to the present disclosure, at least a portion of the protein is from a non-milk protein source, with the balance of the protein derived from milk. The combination of non-milk proteins and milk proteins has been found to provide a complementary effect, particularly when delivered in a full potential format, as these proteins together optimize performance of calves.

Non-milk protein sources may provide at least about 1 percent of the protein by dry weight. In some implementations, non-milk protein sources may provide up to about 65 percent of the protein by dry weight. Accordingly, non-milk proteins may be present in a range from 1 to 65 percent of the protein by dry weight, or in a range bounded by any two integer values between 1 and 65 percent, such as 1 to 50, 1 to 40, 1 to 30, 1 to 20, 1 to 10, 6 to 40, 9 to 18, and 17 to 20 percent of the protein by dry weight. Further, these proteins may be provided as a portion of the total protein at any integer value between 1 and 65 percent, such as at about 1, 2, 3, 4, 5, 6, 7, 8, 9, 10, 11, 12, 13, 14, 15, 16, 17, 18, 19, or 20, 25, 30, 35, 40, 45, 50, 55, 60, or 65 percent of the protein by dry weight.

Non-milk protein sources may include hydrolyzed soy protein modified, soy protein concentrate, soy protein isolate, wheat protein, potato protein, egg protein, blood plasma, red blood cells, egg and combinations of any of these. Hydrolyzed soy protein modified is a soy-based protein produced with a reducing agent to cause hydrolysis of a portion of the soy protein into its constituent amino acids. Processing techniques result in a reduced antigenicity of hydrolyzed soy protein modified, which results in this protein source being more digestible in animals compared to some other soy-based protein sources such as soy flour. U.S. Reissue Patent RE43929 entitled "Method of Processing Soy Protein," and having a common inventor, describes methods of processing soy protein to produce hydrolyzed soy protein modified. Soy protein concentrate is prepared from dehulled soybean seeds by removing most of the oil and water soluble non-protein constituents. Soy protein concentrate generally contains at least about 70 percent protein on a dry weight basis. Soy protein isolate is the major proteinaceous fraction of soybeans prepared from dehulled soybeans by removing the majority of non-protein components. Generally, soy protein isolate contains at least about 90 percent protein on a dry weight basis. Potato protein is generally concentrated to 70 protein or greater. Egg protein is typically a concentrated protein formed of dried or liquid-containing egg yolk and/or albumin (egg whites). Blood plasma is generally a concentrated source of protein obtained by removing the red and white blood cells from fresh whole blood. The resulting plasma is typically about 78 percent protein on a dry weight basis. Red blood cells are generally derived from bovine or porcine blood and contain at least about 85 percent protein on a dry weight basis. Non-milk proteins may be free of non-quality protein sources such as soy flour. Accordingly, in some implementations, the non-milk proteins of the present disclosure may be referred to as quality proteins. In addition or alternatively, the full potential milk replacers of the present disclosure may be free of any of the non-milk proteins described herein.

Milk-derived protein sources are generally referred to as milk proteins and may include whey, whey products such as whey protein concentrate and delactosed whey, casein, skim milk, sodium caseinate and calcium caseinate.

The combination of non-milk protein and milk protein in the milk replacers of the present disclosure is also referred to as complementary proteins. This is because it has been found that formulating milk replacers, and daily rations of milk replacers, that contain at least 25 percent protein by dry weight with a combination of these proteins has a complementary effect in that the performance of the calf is optimized when ingesting such milk replacer.

Fat in the milk replacers of the present disclosure may be provided at levels from about 10 to about 22 percent by dry weight of the milk replacer, with about 20 percent fat by dry weight preferred. Fat is generally added as a dry fat powder where protein is used to encapsulate the fat droplet. Fat used in milk replacers may be of animal or of vegetable origin.

### Methods of Feeding Milk Replacers Containing Non-Milk Protein in Full Potential Settings

Full potential milk replacers containing non-milk proteins may be fed in full potential settings at a rate of at least about 1.6 pounds (0.726 kg) up to about 3.0 pounds (1.36 kg) per head per day. Generally, animals are offered a fixed amount of milk replacer per day, which may form all or a portion of the calf's daily feed ration. Other components of the feed ration may include starter feed. In addition, the milk replacer in the feed ration may be offered twice per day, and may generally be divided into equal parts. In the first week of life, calves in a full potential setting may be offered about 1.6 pounds (0.726 kg) or more (e.g., up to about 1.9 pounds (0.862 kg)) of milk replacer per head per day on a dry weight basis. From the second week of life onward, such animals in a full potential setting may be offered the same amount (about 1.6 pounds (0.726 kg)) of milk replacer or may be offered up to 3.0 pounds (1.36 kg) of milk replacer per head per day on a dry weight basis. Thereafter, the amount of milk replacer offered to the calf may be maintained or the level may decrease, for example, depending on the onset of weaning. However, implementations are not limited to feeding calves at these enhanced feeding rates and some calves may benefit from ingesting a mixture of complementary non-milk and milk proteins in milk replacers containing at least 25 percent protein by dry weight when fed at traditional feeding rates of 1.5 pounds (0.680 kg) per head per day or less.

In addition to milk replacer, starter feed may be offered to the calves on an *ad libitum* basis. Starter feeds, such as calf starter feeds, may include a mixture of one or more of corn, soybean meal, wheat middlings, oats, molasses, fat, ground cotton seed hulls, distillers grains, calcium carbonate, salt, and macronutrients and micronutrients. The starter feed may contain about 45 to 50 percent coarse ingredients such as corn, soy and oats; about 16-22 percent protein; about 2 to 3 percent fat; about 5 to 6 percent fiber (determined on a NIR basis); about 7 percent acid detergent fiber; about 6 percent molasses; and the balance including a mixture of other nutrients.

Methods of feeding milk replacers containing protein, of which as little as 1 percent and as much as 65 percent is composed of non-milk protein, in full potential settings may optimize performance through improved performance or at least through not negatively impacting animal performance in the first three weeks of life compared to calves fed all-milk protein in milk replacers containing the same level of protein at the same feeding rate.

Typically, calves ingest milk replacer during the first six to eight weeks of life and sometimes up to twelve weeks of life. In some implementations of the present disclosure, the calf ingests the milk replacer in a full potential setting for at least three consecutive weeks beginning at a young age. The calf may begin ingesting the milk replacer at or close to birth such as within a few days from birth, e.g., 1-5 days from birth. Thus, calves may be offered milk replacer from about birth (e.g., about 1-5 days from birth) for at least twenty-one consecutive days according to methods of the present disclosure.

With respect to improved performance, calves ingesting the complementary proteins in milk replacers containing at least 25 percent protein by weight at an enhanced feeding rate for at least twenty-one days from about birth have been shown to have equal or improved performance compared to the calves fed milk replacers with the same amount of protein and at the same feeding rate but with all of the protein in the form of milk protein. This improved performance is shown generally through improved growth of the calf along with no reduction in calf health. Such improved performance may involve reduced feed refusal where the animal ingests more of the total amount of offered milk replacer. This improvement is surprising because diminished acceptance is commonly found when traditional milk replacers contain non-milk proteins. However, because the milk replacers of the present disclosure are formulated to circumvent the immature enzyme system of the calf, ingestion of the milk replacer results in improved growth of the animal, which leads to increased hunger, resulting reduced feed refusal by the animal. In addition or alternatively, improved performance may be exhibited by increased consumption of starter feed. In this case, the calves may grow faster and gain more weight by ingesting the milk replacers of the present disclosure, and consequently, may be more hungry and thus may ingest more starter feed, thereby experiencing more efficient growth compared to the same animal ingesting all-milk protein milk replacer under the same feeding conditions. Additionally or alternatively, improved performance may be observed through an increased rate of weight gain and/or an improved feed-to-gain ratio.

The discovery that non-milk proteins perform differently in calves in full potential settings compared to conventional settings is surprising because, as discussed, calves fed milk replacers containing non-milk proteins at conventional feeding levels and rates (e.g., up to 22 percent protein and at rates of up to 1.5 pounds (0.680 kg) per head per day) actually decrease performance compared to animals fed milk replacers containing all-milk proteins. The Examples below are illustrative of this surprising effect. While the Examples illustrate various aspects of the invention, they do not limit the broad aspects of the implementations of the present disclosure.

### Examples

Examples 1-6 below are illustrative of the effects of feeding calves milk replacers in conventional settings and in enhanced settings. Specifically, Examples 1-2 illustrate methods of feeding calves non-milk proteins in conventional settings (e.g., with milk replacers containing 22 percent protein by dry weight and fed at rates of up to 1.5 pounds (0.680 kg) per head per day), and the deleterious effects of such feeding methods; and Examples 3-6 illustrate methods of feeding calves non-milk proteins in enhanced feed settings, and the equal performance or improved performance of such feeding methods compared to feeding milk replacers containing all-milk proteins in the same enhanced feed settings.

Example 1: This example demonstrates the decreased performance of non-milk proteins fed to calves in milk replacers in conventional feed settings.

### Materials and Methods:

Egg protein was fed at conventional rates (at 1.5 pounds (0.680 kg) daily) and was selected for its biological value, which is in excess of 93, meaning egg is a high quality non-milk protein that is considered ideal to show diminished performance of milk replacers fed conventionally. Spray dried egg ("Egg") was either included as such or further processed ("FP Egg") with ethanol, heat and pressure in the hope to improve calf performance. Wheat isolate was also examined in this Example. An all-milk protein positive control was employed where egg or wheat protein replaced a specified percentage of the milk protein. All other nutritional parameters we equalized as not to impact the results of this trial. All of the milk replacer products in Example 1 were formulated to 22 percent protein, 20 percent fat basis and fed at 1.5 pounds (0.680 kg) per head per day. This amount of milk replacer powder is fed in two meals (0.75 pounds (0.340 kg)) daily after mixing into hot water (15 percent solution). The same 20 percent protein calf starter feed was offered to all calves. 90 five-day old (+/- 2 days) bull calves from multiple sources were co-mingled and allotted on a body weight and serum protein (Ig) level to five treatments (18 calves per treatment). Animal performance, feed consumption and health parameters were collected weekly and summarized for this 42 day trial.

Results: The results of Example 1 are provided in Table 1 below.

| Table 1 - Study of All-Milk Protein Control vs. Non-Milk Protein Milk Replacers in Traditional Settings | | | | | | |
|---|---|---|---|---|---|---|
| Treatment | All-Milk | 25% CP Egg | 25% CP FP Egg | 12.5% CP FP Egg | 36% CP Wheat Isolate | SE |
| Initial Ig | 2.75 | 2.65 | 2.75 | 2.63 | 2.59 | 0.24 |
| Initial weight, lbs (kgs). | 98.2(44.5) | 97.4(44.2) | 98.1(44.5) | 99.2(45.0) | 97.9(44.4) | .28(0.13) |
| Weight wk 3 | 115.1(52.2)c | 100.6(45.6)a | 107.0(48.5)b | 109.5(49.7)b | 109.7(49.8)b | 1.91(0.87) |
| Weight wk 6 | 143.9(65.3)c | 120.2(54.5)a | 132.0(59.9)b | 139.4(63.2)bc | 136.1(61.7)bc | 2.87(1.30) |
| | | | | | | |
| Avg. Period Gain, lbs (kgs). | | | | | | |
| Week 1 | 1.10(0.50)b | -4.40(2.00)a | -3.54(1.61)a | -3.70(1.68)a | -3.84(1.74)a | 1.21(0.55) |
| Week 2 | 2.69(1.22)b | -0.71(0.32)a | 3.04(1.38)b | 0.89(0.40)ab | 1.79(0.81)ab | 0.99(0.45) |
| Week 3 | 13.11(5.9)b | 8.32(3.77)a | 9.33(4.23)a | 13.15(5.96)b | 13.85(6.28)b | 0.97(0.44) |
| | | | | | | |
| Total Gain | 45.69(20.72)c | 22.87(10.37)a | 33.89(15.37)b | 40.24(18.25)bc | 38.25(17.35)b | 2.41(1.09) |
| | | | | | | |
| Total Milk Replacer Consumption, lbs (kgs). (DM Basis) | | | | | | |
| | 55.30(25.08)b | 50.93(23.10)a | 53.22(24.14)ab | 52.40(23.77)ab | 52.92(24.00)ab | 1.03(0.47) |
| | | | | | | |
| Total Dry Feed Consumption. lbs (kgs). (DM Basis) | | | | | | |
| | 30.25(13.72)b | 21.73(9.86)a | 24.31(11.03)ab | 32.05(14.54)b | 29.23(13.26)ab | 2.92(1.32) |
| | | | | | | |
| Average Feed to Gain | | | | | | |
| | 1.92a | 3.81b | 2.40a | 2.12a | 2.24a | 0.23 |
| | | | | | | |
| Total Diarrhea Days* | | | | | | |
| Total 4 wk | 2.75a | 3.18a | 4.81ab | 3.13a | 5.65b | 0.78 |
| | | | | | | |
| Total Respiratory Days* | | | | | | |
| | 0.19a | 1.41ab | 0.56a | 0.38a | 2.24b | 0.49 |
| Means in the same row not followed by a common letter differ (P<.05) using LSD procedure. *Diarrhea or Respiratory Day - Sum of days that calves required treatments for one of these two health issues. | | | | | | |

Summary: As shown in Table 1, weeks one, two and three gains favored the control fed calves. Cumulative two week total gains for the calves were 3.78, -5.05, -.50, -2.89 and -2.02 pounds (1.71, -2.29, -0.23, -1.31 and -0.92 kg, respectively) respectively, for the control and four non-milk protein containing milk replacers. Cumulative three week gains were 16.89, 3.30, 8.83, 10.22 and 11.84 pounds (7.66, 1.50, 4.01, 4.64 and 5.37 kg, respectively), respectively. From this early gain data, calves fed non-milk protein-containing diets had difficulty utilizing these protein sources. Total gain in this trial was significantly improved (P<0.05) for the control fed calves compared with all but the treatment containing the lowest inclusion of egg protein (12.5 % CP FP Egg). Generally, the all milk-protein fed control group consumed more milk replacer and starter feed. In addition, control animals were generally more efficient, experienced fewer total diarrhea and total respiratory illness days.

Conclusion: Example 1 illustrates the negative performance and health impacts of feeding quality, animal- and plant-based proteins to infant calves.

Example 2: This second trial further depicts the negative impact of inclusion of non-milk protein in conventional fed milk replacers to infant calves.

Materials and Methods: In this trial, seventy-two calves (sourced as in the first trial) were fed one of four treatments. The control was an all-milk protein product containing 22 percent protein and 20 percent fat. The second treatment was also formulated to provide equal protein / fat as the control but replaced 50 percent of the milk protein with that from a hydrolyzed soy protein modified ("HSPM"). Believing that a higher protein non-milk protein-containing milk replacer product might support better performance, the final two treatments were formulated to contain 25 percent protein. The third treatment (25 protein:20 fat) had soy isolate replacing 37.5 percent of the milk protein. The fourth treatment had 37.5 percent of the milk protein replaced by HSPM and another 2 percentage units of the protein replaced by plasma. All products were hydrated to a 15 percent solution prior to feeding (fed in two meals of 0.75 pounds (0.340 kg) daily after mixing into hot water). The same 20 percent calf starter was fed to all calves. Animal performance, feed consumption and health parameters were collected weekly and summarized for this 42 day trial.

Results: The results of Example 2 are provided in Table 2 below.

| Table 2 - Study of All-Milk Protein Control vs. Non-Milk Protein Milk Replacers in Traditional Settings | | | | | |
|---|---|---|---|---|---|
| Treatment | 22:20 All Milk | 22:20 50 % CP HSPM | 25:20 37.5% CP SI | 25:20 37.5% CP HSPM, 2.0% Plasma | SE |
| Initial Ig | 3.50 | 3.56 | 3.50 | 3.61 | 0.30 |
| Initial weight, Ibs (kgs). | 96.9(44.0) | 97.7(44.3) | 96.8(43.9) | 96.9(44.0) | 1.23(0.56) |
| Weight wk 3 | 108.3(49.1) | 104.5(47.4) | 104.9(47.6) | 104.8(47.5) | 2.17(0.98) |
| Weight wk 6 | 140.4(63.7) | 132.5(60.1) | 136.0(61.7) | 134.6(61.1) | 3.27(1.48) |
| Avg. Weekly Gain, Ibs (kgs). | | | | | |
| Week 1 | 0.09(0.04)b | -2.94(1.33)a | 0.02(0.01)b | -0.79(0.35)ab | 0.87(0.39) |
| Week 2 | 2.46(1.12)b | 1.28(0.58)ab | -0.38(0.17)a | 0.91(0.41)ab | 0.92(0.42) |
| Week 3 | 8.78(3.98) | 8.51(3.86) | 8.38(3.80) | 7.78(3.53) | 0.75(0.34) |
| Week 6 | 10.83(4.91) | 9.17(4.16) | 11.07(5.02) | 10.02(4.54) | 1.08(0.49) |
| | | | | | |
| Total Gain | 43.44(19.70)b | 34.87(15.82)a | 39.11(17.74)ab | 37.71(17.10)ab | 2.89(1.31) |
| | | | | | |
| Total Milk Replacer Consumption, lbs (kgs). (DM Basis) | | | | | |
| | 51.32(23.28) | 49.45(22.43) | 50.28(22.81) | 49.25(22.34) | 1.30(0.59) |
| | | | | | |
| Total Dry Feed Consumption, lbs (kgs). (DM Basis) | | | | | |
| | 36.54(16.57) | 31.74(14.40) | 29.84(13.54) | 33.04(14.99) | 2.90(1.32) |
| | | | | | |
| Average Feed to Gain | 2.13ab | 2.52b | 2.09a | 2.37ab | 0.14 |
| | | | | | |
| Total Respiratory Days* | 1.00 | 2.19 | 1.44 | 1.89 | 0.52 |
| Means in the same row not followed by a common letter differ (P<.05) using LSD procedure. *Respiratory Day - Sum of days that calves required treatments for this health issue. | | | | | |

Summary: As was the case in the previous trial, calves fed non-milk protein gained less weight than did controls. Cumulative two week gains for the control group and those assigned to the three non-milk protein treatments were: 2.55, -1.66, -0.36 and .28 pounds (1.16, -0.75, -0.16 and 0.13 kg, respectively), respectively. Three week gains for these treatments were: 11.33, 6.85, 8.02 and 7.90 pounds (5.14, 3.11, 3.64 and 7.90 kg, respectively). Again total gain for the trial, favored the all-milk control group. These animals gained 8.99, 4.33 and 5.73 pounds (4.08, 1.96 and 2.60 kg, respectively) more weight than the respective non-milk protein containing treatments. Total milk replacer intake, dry feed intake, feed efficiency and respiratory scores all tended to favor the all milk protein control fed animals.

Conclusion: Examples 1 and 2 demonstrate the poor response of feeding calves different non-milk proteins in conventionally fed milk replacers. Interestingly, these protein sources are considered quality proteins when employed in feeds for older animals. However, as shown in these examples, these protein sources result in poor performance when provided in diets for infant animals due to the enzymatic systems required to effectively utilize these proteins not having been developed.

Example 3: According to the present disclosure, it has been discovered that by increasing the feeding rate and protein level of milk replacers containing non-milk protein, the hindrance of the immature enzyme system can be circumvented. In Example 3, two trials were conducted to examine the benefits of a blended protein product containing the complementary proteins of non-milk and all-milk proteins.

Materials and Methods: Forty calves were employed in each of these trials to evaluate an all-milk control or a blended non-milk protein milk replacer with soy isolate replacing 35 and blood plasma replacing 15 percent of the milk protein, respectively. These 42 day trials were summarized together (forty calves were assigned to both treatments). Milk replacers contained 29 - 30 percent protein and 20 percent fat. In this trial, a 22 percent protein calf starter was fed to all calves. Calves were sourced as in the previous Examples but were fed an increased level of milk replacer powder in this trial. Calves received 1.8 pounds (0.816 kg) of powder during the first week on trial and 2.5 pounds (1.13 kg) of powder during weeks 2 through 6. During the final week of the trial, calves were again offered 1.8 pounds (0.816 kg) of milk replacer powder to promote increased starter intake. Milk replacers were hydrated prior to feeding to a 17 percent solution (fed in two meals daily after mixing into hot water).

Results: The results of Example 3 are provided in Table 3 below.

| Table 3 - Study of All-Milk Protein Control vs. Non-Milk Protein Milk Replacers in Full Potential Settings | | | | |
|---|---|---|---|---|
| Treatment | All Milk | 35% CP SI 15% Plasma, | P value | SE |
| Initial Ig | 3.17 | 3.33 | 0.58 | 0.21 |
| | | | | |
| Initial Wt., lbs (kgs). | 104.93(47.60) | 104.52(47.41) | 0.78(0.35) | 1.04(0.47) |
| Week 3 Wt., lbs (kgs). | 127.79(57.96) | 128.86(58.45) | 0.74(0.34) | 2.29(1.04) |
| Week 7 Wt., lbs (kgs). | 181.91(82.51) | 184.00(83.46) | 0.68(0.31) | 3.55(1.61) |
| | | | | |
| Avg. Gain, lbs (kgs). | | | | |
| Week 1 | 2.79(1.27) | 2.48(1.12) | 0.84(0.38) | 1.08(0.49) |
| 2 | 9.85(4.47) | 10.17(4.61) | 0.85(0.39) | 1.19(0.54) |
| 3 | 10.40(4.72) | 11.81(5.36) | 0.41(0.19) | 1.21(0.55) |
| | | | | |
| Total Gain (42 days) | 77.38(35.10) | 79.75(36.17) | 0.60(0.27) | 3.18(1.44) |
| | | | | |
| Total Milk Replacer Consumption, lbs (kgs). (DM Basis) | | | | |
| | 93.57(42.44) | 99.41(45.09) | 0.06(0.03) | 2.11(0.96) |
| | | | | |
| Total Dry Feed Consumption, lbs (kgs). (DM Basis) | | | | |
| | 43.72(19.83) | 43.25(19.62) | 0.90(0.41) | 2.52(1.14) |
| | | | | |
| Average Feed to Gain | 1.84 | 1.83 | 0.83 | 0.05 |
| | | | | |
| Total Diarrhea Days* | 4.97 | 4.40 | 0.55 | 0.67 |
| | | | | |
| Total Respiratory Days* | 3.60 | 2.25 | 0.17 | 0.68 |
| *Diarrhea or Respiratory Day - Sum of days that calves required treatments for one of these two health issues. | | | | |

Summary: As shown in Table 3, the results of Example 3 point to the improved utility of soy isolate and plasma in milk replacer containing high levels of protein when fed at an elevated rate. Gain during the first 3 weeks was elevated for calves fed the non-milk protein blend compared to the all-milk control (24.46 pounds (11.09 kg) for the treatment group vs. 23.04 pounds (10.45 kg) for the control group) even though 50 percent of the milk protein was replaced with non-milk protein. In addition, the non-milk protein-fed animals had numerically more gain during the whole trial. All other performance and health data were similar between treatments.

Conclusion: Based on the results of Example 3 and other Examples of the present disclosure, non-milk proteins can be included in milk replacers without causing a performance lag by providing non-milk proteins in full potential settings (e.g., at elevated protein levels and enhanced feeding rates). As the cost of milk proteins increases, the use of non-milk proteins represents a meaningful saving to the dairy producer.

Example 4: In another trial, three non-milk protein-containing milk replacers were compared to an all milk protein control product.

Materials and Methods: All-milk protein milk replacers contained 26 percent protein and 20 percent fat. Ninety-six infant calves were sourced as described in Example 1. Twenty-four animals were assigned to: 1) the all-milk protein control; 2) a non-milk protein with 19 percent of the milk protein replaced by HSPM; 3) a non-milk protein with 19 percent of the milk protein replaced by a HSPM / soy isolate / plasma (Blend) or 4) a milk replacer with 38 percent of the milk protein replaced by the non-milk protein Blend used in treatment 3. Calves received 1.8 pounds (0.816 kg) of powder during the first week and 2.5 pounds (1.13 kg) of powder during weeks 2 through 6. During the final week of the trial, calves were again offered 1.8 pounds (0.816 kg) of milk replacer powder to promote increased starter intake. Milk replacers were hydrated prior to feeding to a 17 percent solution (fed in two meals daily after mixing into hot water). A 22 percent protein calf starter was fed to all calves.

Results: The results of Example 4 are provided in Table 4 below.

| Table 4 - Study of All-Milk Protein Control vs. Non-Milk Protein Milk Replacers in Full Potential Settings | | | | | |
|---|---|---|---|---|---|
| Treatment | All Milk | 19% CP HSPM | 19%CP Blend | 38% CP Blend | SE |
| Initial Ig | 4.00 | 3.95 | 4.10 | 4.26 | 0.24 |
| | | | | | |
| Initial weight, lbs (kgs). | 98.5(44.7) | 98.5(44.7) | 98.1(44.5) | 99.0(44.9) | 1.01(0.46) |
| Weight wk 1 | 105.1(47.7) | 104.8(47.5) | 104.9(47.6) | 103.4(46.9) | 1.46(0.66) |
| Weight wk 2 | 118.0(53.5) | 118.4(53.7) | 120.4(54.6) | 117.2(53.2) | 2.02(0.92) |
| Weight wk 3 | 130.0(59.0) | 131.3(59.6) | 132.6(60.1) | 128.8(58.4) | 2.11(0.96) |
| Weight wk 7 | 179.1(81.2) | 187.5(85.0) | 184.2(83.6) | 180.4(81.8) | 3.97(1.80) |
| | | | | | |
| Avg. Gain, lbs (kgs). | | | | | |
| Week 1 | 6.59(2.99) | 6.31(2.86) | 6.78(3.08) | 4.46(2.02) | 1.14(0.52) |
| Week 2 | 12.95(5.87) | 13.56(6.15) | 15.54(7.05) | 13.78(6.25) | 1.15(0.52) |
| Week 3 | 11.97(5.43) | 12.87(5.84) | 12.18(5.52) | 11.55(5.24) | 0.81(0.37) |
| Week 7 | 9.77(4.43) | 12.84(5.82) | 11.33(5.14) | 11.25(5.10) | 1.22(0.55) |
| | | | | | |
| Total Gain | 80.7(36.6) | 89.0(40.4) | 86.1(39.1) | 81.4(36.9) | 3.76(1.71) |
| | | | | | |
| Total Milk Replacer Consumption. lbs (kgs). (DM Basis) | | | | | |
| | 104.6(47.4) | 102.7(46.6) | 104.8(47.5) | 102.6(46.5) | 1.42(0.64) |
| | | | | | |
| Total Dry Feed Consumption. lbs (kgs). (DM Basis) | | | | | |
| | 30.41(13.79) | 40.45(18.35) | 31.79(14.42) | 32.71(14.84) | 3.62(1.64) |
| | | | | | |
| Average Feed to Gain | 1.70 | 1.64 | 1.61 | 1.68 | 0.04 |
| | | | | | |
| Total Diarrhea Days* | 5.62ab | 4.29a | 4.90ab | 6.32b | 0.70 |
| | | | | | |
| Total Respiratory Days* | 4.86 | 3.90 | 4.05 | 2.37 | 0.98 |
| Means in the same row not followed by a common letter differ (P<.05) using LSD procedure. *Diarrhea or Respiratory Day - Sum of days that calves required treatments for one of these two health issues. | | | | | |

Summary: Gains by calves fed these treatments during the first three weeks were again similar. As mentioned, during this period of time, a lag is typically noted for non-milk protein fed via conventional practice. Total three week gains for these four treatments were 31.51, 32.74, 34.50 and 29.79 pounds (14.29, 14.85, 15.65 and 13.51 kg, respectively), respectively. Total gains resulting from the 42 day trial numerically favored calves fed the non-milk protein treatments. Dry feed intake and feed-to-gain ratio also trended to favor calves fed the non-milk protein containing milk replacers. Calf health data was not different between the all milk protein and non-milk protein treatments.

Conclusion: In this trial, the non-milk protein sources differed from those used in Example 3. Again, no diminishment in performance or health was noted because of the protein content and feeding rate of the milk replacer. As mentioned in the previous example, use of HSPM or the blended non-milk protein would represent meaningful savings to producers.

Example 5: To better define the breadth of this approach, a two-treatment trial was conducted.

Materials and Methods: In this Example, forty-eight calves were sourced as described in Example 1 and allotted to two treatments. Milk replacer treatments included an all-milk protein control and one with 50 percent of the milk protein replaced with soy isolate. Calves consumed an average of 1.9 pounds (0.862 kg) of powder per day of two 25 percent protein: 20 percent fat milk replacers. To avoid confounding milk replacer protein merit with that of protein provided by starter feed, only milk replacer was fed during this shorter 28 day trial. Milk replacers were hydrated prior to feeding to a 15 percent solution (fed in two meals daily after mixing into hot water).

Results: The results of Example 5 are provided in Table 5 below.

| Table 5 - Study of All-Milk Protein Control vs. Non-Milk Protein Milk Replacers in Full Potential Settings | | | |
|---|---|---|---|
| Treatment | All Milk | 50% CP Soy Isolate | SE |
| | | | |
| Initial Ig | 2.38 | 2.21 | 0.28 |
| | | | |
| Initial Wt., lbs (kgs). | 98.93(44.87) | 98.77(44.80) | 1.40(0.64) |
| Week 1 Wt., lbs (kgs). | 99.86(45.30) | 99.71(45.23) | 1.87(0.85) |
| Week 2 Wt., lbs (kgs). | 104.33(47.32) | 105.10(47.67) | 2.49(1.13) |
| Week 3 Wt., lbs (kgs). | 116.44(52.82) | 117.18(53.15) | 2.81(1.27) |
| Week 4 Wt., lbs (kgs). | 131.17(59.50) | 131.41(59.61) | 3.10(1.41) |
| | | | |
| Avg. Gain, lbs (kgs). | | | |
| Week 1 | 0.94(0.43) | 0.94(0.43) | 0.95(0.43) |
| Week 2 | 4.47(2.03) | 5.39(2.44) | 0.99(0.45) |
| Week 3 | 12.11(5.49) | 12.08(5.48) | 0.77(0.35) |
| Week 4 | 14.74(6.69) | 14.24(6.46) | 0.72(0.33) |
| | | | |
| Total Gain | 32.25(14.63) | 32.64(14.81) | 2.16(0.98) |
| | | | |
| Total Milk Replacer Consumption. lbs (kgs). (DM Basis) | | | |
| | 52.09(23.63) | 54.36(24.66) | 1.34(0.61) |
| | | | |
| Average Feed to Gain | 1.73 | 1.75 | 0.12 |
| | | | |
| Total Diarrhea Days* | 6.19 | 5.36 | 1.06 |
| | | | |
| Total Respiratory Days* | 1.25 | 1.86 | 0.56 |
| NS, Means not different (P> 0.05). | | | |
| *Diarrhea or Respiratory Day - Sum of days that calves required treatments for one of these two health issues. | | | |

Summary: Weekly gains and total gain favored calves fed this source of non-milk protein. This result would not have been expected if this non-milk protein source or others would have been fed conventionally. Also, milk replacer intake, feed-to-gain ratio, and health parameters were similar in this study. Further, the results of Example 5 show that even when the calf ingests milk replacer at about 1.9 pounds (0.862 kg) per head per day for four weeks, animal's performance is not negatively affected by the ingestion of the milk replacer formulated with complementary proteins, and in fact, favored the calves ingesting the test product versus the control product.

Conclusion: This trial suggests that a milk replacer protein level as low as 25 percent fed to an average powder intake of 1.9 pounds (0.862 kg) per calf daily, is sufficient to eliminate the non-milk protein drag seen with conventionally fed milk replacers.

Example 6: In another trial, two non-milk protein-containing milk replacers were compared to an all-milk protein control product.

Materials and Methods: All-milk protein milk replacers contained 28 percent protein and 10 percent fat. Sixty-three infant calves were sourced as described in previous examples. The animals were assigned to: 1) the all-milk protein control; 2) a non-milk protein with 9 percent of the milk protein replaced by HSPM; 3) a non-milk protein with 18 percent of the milk protein replaced by HSPM. Calves received 1.8 pounds (0.816 kg) of powder during the first week and 2.5 confirm pounds (1.13 kg) of powder during weeks 2 through 6. Milk replacers were hydrated prior to feeding to a 17 percent solution (fed in two meals daily after mixing into hot water). A 22 percent protein calf starter was fed to all calves.

Results: The results of Example 6 are provided in Table 6 below.

| Table 6 - Study of All-Milk Protein Control vs. Non-Milk Protein Milk Replacers in Full Potential Settings | | | | | |
|---|---|---|---|---|---|
| Treatment | All Milk | 9%CP HSPM | 18% CP HSPM | P if<.2 | SE |
| Initial Ig | 4.10 | 4.32 | 4.05 | | 0.20 |
| | | | | | |
| Initial weight, lbs (kgs). | 96.3(43.7) | 96.7(43.9) | 96.6(43.8) | | 0.90(0.41) |
| Weight wk 1 | 101.1(45.9) | 103.4(46.9) | 103.5(46.9) | | 1.04(0.47) |
| Weight wk 2 | 115.1(52.2) | 118.1(53.6) | 117.5(53.3) | | 1.55(0.70) |
| Weight wk 3 | 128.0(58.1) | 131.2(59.5) | 129.9(58.9) | | 1.84(0.83) |
| Weight wk 7 | 181.2(82.19) | 189.1(85.8) | 188.8(85.6) | 0.18(0.08) | 3.35(1.52) |
| | | | | | |
| Avg. Gain, lbs (kgs). | | | | | |
| Week 1 | 4.77(2.16) | 6.70(3.04) | 6.90(3.13) | | 0.93(0.42) |
| Week 2 | 13.95(6.33) | 14.73(6.68) | 14.04(6.37) | | 1.12(0.51) |
| Week 3 | 12.95(5.87) | 13.05(5.92) | 11.76(5.33) | | 0.87(0.39) |
| Week 7 | 12.15(5.51)a | 14.68(6.66)ab | 16.03(7.27)b | 0.04(0.02) | 1.07(0.49) |
| | | | | | |
| Total Gain | 84.9(38.5) | 92.4(41.9) | 92.3(41.9) | | 3.41(1.55) |
| | | | | | |
| Total Milk Replacer Consumption. lbs (kgs). (DM Basis) | | | | | |
| | 103.9(47.13)a | 106.0(48.1)ab | 107.0(48.5)b | 0.03(0.01) | 0.8(0.4) |
| | | | | | |
| Total Dry Feed Consumption, lbs (kgs). (DM Basis) | | | | | |
| | 44.35(20.12) | 54.84(24.88) | 48.65(22.07) | .18(0.08) | 3.97(1.80) |
| | | | | | |
| Average Feed to Gain | 1.78 | 1.76 | 1.69 | | 0.04 |
| | | | | | |
| Total Diarrhea Days* | 6.90b | 6.23ab | 4.95a | 0.05 | 0.55 |
| | | | | | |
| Total Respiratory Days* | 2.25 | 2.18 | 2.00 | | 0.6 |
| | | | | | |
| Means in the same row not followed by a common letter differ (P<.05) using LSD procedure. *Diarrhea or Respiratory Day - Sum of days that calves required treatments for one of these two health issues. | | | | | |

Summary: Gains by calves fed these treatments during the first three weeks were similar to gains experienced by the control group. As mentioned, during this period of time, a lag is typically noted for non-milk protein fed via conventional practice. Total three week gains for the two treatments were 13.05 and 11.06 pounds (5.92 and 5.02 kg, respectively), respectively. Total gains resulting from the 42 day trial numerically favored calves fed the HSPM treatments. Dry feed intake and feed-to-gain ratio also trended to favor calves fed the non-milk protein containing milk replacers. Calf health data was not different between the all milk protein and non-milk protein treatments.

Conclusion: In this trial, the non-milk protein sources differed from those used in Examples 3 and 5, and HSPM was provided at a lower rate in comparison to Example 4. Again, no diminishment in performance or health was noted because of the protein content and feeding rate of the milk replacer. As mentioned in the previous example, use of HSPM or the blended non-milk protein would represent meaningful savings to producers.

Conclusion for Examples 1-6:

The first two examples present the problem with non-milk protein sources when fed conventionally. Conventional milk replacer feeding is defined as feeding 1.5 pounds (0.680 kg), daily of milk replacer that contains less that 25 percent protein. Feeding of all non-milk protein sources when fed via this practice, result in an early growth lag from which calves cannot generally recover. Also, health and other performance criteria usually suffer when non-milk protein sources are fed by conventional means.

The latter four examples present findings that demonstrate the merit to non-milk protein sources that result by feeding a higher protein milk replacer differently. No non-milk protein performance lag is noted when a 25 percent protein or greater milk replacer is fed at elevated feeding rates. In fact, several observations suggest that calf gain may actually be improved by this practice. Feeding increased levels of milk replacer dramatically improve calf performance by fueling early more efficient gain. Use of non-milk protein as a significant protein source in milk replacers designed for this purpose, reduces the major concern of feeding levels of milk replacer. The reduction in cost resulting from use of non-milk protein makes the approach of feeding at enhanced levels more cost effective and justifiable on-farm.

## Claims

1. A method of feeding a calf comprising:
providing at least 0.816 kg (1.8 pounds) of a milk replacer by dry weight per calf per day beginning from about the time of birth for at least twenty-one days, the milk replacer comprising at least about 25 percent protein by dry weight and wherein at least about 1 percent of the protein by dry weight is a non-milk protein; and
wherein at twenty-one days from birth, the calf experiences improved performance in response to ingesting said milk replacer.

2. The method of claim 1, wherein the improved performance comprises an increased milk replacer intake and/or increased feed-to-gain ratio and/or increased weight gain.

3. The method of claim 1 or 2, wherein the non-milk protein comprises one or more of hydrolyzed soy protein modified, soy protein concentrate, soy protein isolate, wheat protein, potato protein, egg protein, blood plasma, red blood cells or egg.

4. A method of feeding a calf comprising:
providing at least 0.816 kg (1.8 pounds) of a milk replacer by dry weight per calf per day beginning from about the time of birth for at least twenty-one days, the milk replacer comprising at least about 25 percent protein by dry weight and wherein at least about 1 percent of the protein by dry weight is a non-milk protein, the non-milk protein comprising one or more of hydrolyzed soy protein modified, wheat protein, potato protein, egg protein, blood plasma, red blood cells or egg.

5. The method of claim 4, wherein the non-milk protein further comprises one or more of soy protein concentrate or soy protein isolate.

6. The method of claim 4 or 5, wherein at twenty-one days from birth, the calf experiences improved performance in response to the calf ingesting said milk replacer.

7. The method of claim 6, wherein the improved performance comprises an increased feed-to-gain ratio and/or an increased rate of weight gain.

8. The method of any one of claims 1 to 3, 6 or 7, further comprising providing the calf a starter feed on an *ad libitum* basis, and wherein the improved performance comprises an increased rate of starter feed intake.

9. The method of any one of the preceding claims, wherein the non-milk protein comprises from about 1 percent to about 65 percent of the protein by dry weight.

10. The method of any one of the preceding claims, wherein a balance of the protein in the milk replacer is protein derived from milk.

## Patentansprüche

1. Verfahren für das Füttern eines Kalbs, umfassend:
das Bereitstellen von mindestens 0,816 kg (1,8 Pfund) eines Milchaustauschstoffs, auf das Trockengewicht pro Kalb bezogen, pro Tag, beginnend etwa vom Zeitpunkt der Geburt mindestens einundzwanzig Tage lang, wobei der Milchaustauschstoff mindestens etwa 25 Prozent Protein, auf das Trockengewicht bezogen, umfasst und wobei mindestens etwa 1 Prozent des Proteins, auf das Trockengewicht bezogen, Nichtmilchprotein ist; und
wobei am einundzwanzigsten Tag nach der Geburt das Kalb eine verbesserte Leistungsfähigkeit auf das Aufnehmen des Milchaustauschstoffs hin erfährt.

2. Verfahren nach Anspruch 1, wobei die verbesserte Leistungsfähigkeit eine erhöhte Einnahme des Milchaustauschstoffs und/oder ein erhöhtes Futter-zu-Zunahme-Verhältnis und/oder eine erhöhte Gewichtszunahme umfasst.

3. Verfahren nach Anspruch nach Anspruch 1 oder 2, wobei das Nichtmilchprotein ein oder mehrere von hydrolysiertem modifiziertem Sojaprotein, Sojaproteinkonzentrat, Sojaproteinisolat, Weizenprotein, Kartoffelprotein, Eiprotein, Blutplasma, roten Blutzellen oder Ei umfasst.

4. Verfahren für das Füttern eines Kalbs, umfassend:
das Bereitstellen von mindestens 0,816 kg (1,8 Pfund) eines Milchaustauschstoffs, auf das Trockengewicht pro Kalb bezogen, pro Tag, beginnend etwa vom Zeitpunkt der Geburt mindestens einundzwanzig Tage lang, wobei der Milchaustauschstoff mindestens etwa 25 Prozent Protein, auf das Trockengewicht bezogen, umfasst und wobei mindestens etwa 1 Prozent des Proteins, auf das Trockengewicht bezogen, Nichtmilchprotein ist, wobei das Nichtmilchprotein ein oder mehrere von hydrolysiertem modifiziertem Sojaprotein, Weizenprotein, Kartoffelprotein, Eiprotein, Blutplasma, roten Blutzellen oder Ei umfasst.

5. Verfahren nach Anspruch 4, wobei das Nichtmilchprotein ferner eines oder mehrere von Sojaproteinkonzentrat oder Sojaproteinisolat umfasst.

6. Verfahren nach Anspruch 4 oder 5, wobei am einundzwanzigsten Tag nach der Geburt das Kalb eine verbesserte Leistungsfähigkeit als Reaktion auf das Aufnehmen, durch das Kalb, des Milchaustauschstoffs erfährt.

7. Verfahren nach Anspruch 6, wobei die verbesserte Leistungsfähigkeit ein erhöhtes Futter-zu-Zunahme-Verhältnis und/oder eine erhöhte Gewichtszunahme umfasst.

8. Verfahren nach einem der Ansprüche 1 bis 3, 6 oder 7, ferner das Versorgen des Kalbs mit einem Startfutter auf einer ad-libidum-Basis umfassend und wobei die verbesserte Leistungsfähigkeit eine erhöhte Rate der Startfutteraufnahme umfasst.

9. Verfahren nach einem der vorhergehenden Ansprüche, wobei das Nichtmilchprotein etwa 1 Prozent bis etwa 65 Prozent des Proteins, auf das Trockengewicht bezogen, umfasst.

10. Verfahren nach einem der vorhergehenden Ansprüche, wobei ein Rest des Proteins in dem Milchaustauschstoff von Milch abgeleitetes Protein ist.

## Revendications

1. Procédé d'alimentation d'un veau comprenant:
la fourniture d'au moins 0,816 kg (1,8 livre) d'un succédané de lait en poids sec par veau par jour commençant à partir d'environ le moment de la naissance durant au moins vingt-et-un jours, le succédané de lait comprenant au moins environ 25 pour cent de protéine en poids sec et où au moins environ 1 pour cent de la protéine en poids sec est une protéine non d'origine laitière; et
où à vingt-et-un jours de la naissance, le veau connaît une performance améliorée en réponse à l'ingestion dudit succédané de lait.

2. Procédé selon la revendication 1, dans lequel la performance améliorée comprend une ingestion accrue de succédané de lait et/ou un indice de consommation alimentaire accru et/ou un niveau accru de gain de poids.

3. Procédé selon la revendication 1 ou 2, dans lequel la protéine non d'origine laitière comprend une ou plusieurs d'une protéine de soja hydrolysée modifiée, d'un concentré de protéine de soja, d'un isolat de protéine de soja, d'une protéine de blé, d'une protéine de pomme de terre, d'une protéine d'oeuf, de plasma sanguin, d'hématies ou d'oeuf.

4. Procédé d'alimentation d'un veau comprenant:
la fourniture d'au moins 0,816 kg (1,8 livre) d'un succédané de lait en poids sec par veau par jour commençant à partir d'environ le moment de la naissance durant au moins vingt-et-un jours, le succédané de lait comprenant au moins environ 25 pour cent de protéine en poids sec et où au moins environ 1 pour cent de la protéine en poids sec est une protéine non d'origine laitière, la protéine non d'origine laitière comprenant une ou plusieurs d'une protéine de soja hydrolysée modifiée, d'une protéine de blé, d'une protéine de pomme de terre, d'une protéine d'oeuf, de plasma sanguin, d'hématies ou d'oeuf.

5. Procédé selon la revendication 4, dans lequel la protéine non d'origine laitière comprend en outre un ou plusieurs concentrés de protéine de soja ou isolats de protéine de soja.

6. Procédé selon la revendication 4 ou 5, dans lequel à vingt-et-un jours de la naissance, le veau connaît une performance améliorée en réponse à l'ingestion par le veau dudit succédané de lait.

7. Procédé selon la revendication 6, dans lequel la performance améliorée comprend un indice de consommation alimentaire accru et/ou un niveau accru de gain de poids.

8. Procédé selon l'une quelconque des revendications 1 à 3, 6 ou 7, comprenant en outre la fourniture au veau d'un aliment de démarrage sur une base *ad libitum,* et où la performance améliorée comprend un niveau accru d'ingestion d'aliment de démarrage.

9. Procédé selon l'une quelconque des revendications précédentes, dans lequel la protéine non d'origine laitière comprend d'environ 1 pour cent à environ 65 pour cent de la protéine en poids sec.

10. Procédé selon l'une quelconque des revendications précédentes, dans lequel un reste de la protéine dans le succédané de lait est une protéine dérivé du lait.
